# EUROPÄISCHE PATENTSCHRIFT

(11) **EP 2 300 793 B1**
(45) Veröffentlichungstag und Bekanntmachung des Hinweises auf die Patenterteilung: **14.03.2012**
(21) Anmeldenummer: 08785030.1
(22) Anmeldetag: 16.07.2008
(51) Int. Cl.: G01J 5/02, G01J 5/04, G01K 13/08

(54) **ANORDNUNG MIT EINER ELEKTRISCHEN MASCHINE SOWIE VERFAHREN ZUM BETREIBEN EINER ELEKTRISCHEN MASCHINE**
SYSTEM COMPRISING AN ELECTRIC MACHINE AND METHOD FOR OPERATING AN ELECTRIC MACHINE
AGENCEMENT AVEC UNE MACHINE ÉLECTRIQUE ET PROCÉDÉ DE FONCTIONNEMENT D'UNE MACHINE ÉLECTRIQUE

(43) Veröffentlichungstag der Anmeldung: 30.03.2011
(73) Patentinhaber: Siemens Aktiengesellschaft, 80333 München (DE)
(72) Erfinder: ZETTNER, Jürgen, 90587 Veitsbronn (DE)
(86) Internationale Anmeldenummer: PCT/EP2008/006077
(87) Internationale Veröffentlichungsnummer: WO 2010/006631

(56) Entgegenhaltungen:
- EP-A- 1 348 940
- JP-A- 55 099 033
- JP-A- 59 085 921
- JP-A- 2004 116 316

## Beschreibung

In Geräten mit komplizierten Einbauverhältnissen und rauen Umgebungsbedingungen ist eine Temperaturmessung mittels Berührungsthermometern häufig nicht ohne weiteres möglich. Speziell bei elektrischen Maschinen, d.h. bei Elektromotoren und Generatoren, stellt die Temperaturmessung an rotierenden Teilen in der Praxis ein Problem dar. So ist beispielsweise eine Temperaturüberwachung des Läufers, d.h. Rotors, von Elektromotoren wünschenswert, da eine solche Überwachung Aussagen über den Betriebszustand der elektrischen Maschine erlaubt und eine Optimierung der Auslegung der Leistungsklasse des Elektromotors ermöglicht. Hierdurch kann insbesondere eine Überdimensionierung des Motors vermieden werden. Darüber hinaus kann eine Temperaturüberwachung auch für die Steuerung des Motors verwendet werden, wodurch eine optimale Nutzung, d.h. ein besonders ökonomischer oder leistungsorientierter Betrieb, ermöglicht wird.

Üblicherweise tritt im Betrieb die Maximaltemperatur in der Mitte des Rotors auf. Jedoch können fertigungsbedingte Abweichungen die Maximaltemperatur auch an einer anderen Stelle des Rotors entstehen lassen. Um eine schnellstmögliche Regelung beziehungsweise Anpassung durch die Motorsteuerung erzielen zu können, sollte eine Temperaturmessung möglichst aussagekräftig sein und darüber hinaus ohne eine zeitliche Verzögerung erfolgen.

Die vorliegende Erfindung betrifft eine Anordnung mit einer elektrischen Maschine, die einen Stator und einen Rotor aufweist, sowie mit einem Infrarot-Temperatursensor.

Eine solche Anordnung ist aus der deutschen Offenlegungsschrift DE 102 57 974 A 1 bekannt. Diese beschreibt eine Positionsmesseinrichtung zur Erfassung der Position zweier zueinander beweglicher Objekte, bei denen es sich um den Stator sowie den Rotor eines Elektromotors handeln kann. Die bekannte Positionsmesseinrichtung weist einen Infrarot-Temperatursensor auf, mit dem kontaktlos die Temperatur an einem Messpunkt der elektrischen Maschine bestimmt werden kann, wobei der Messpunkt beispielsweise auf der Stirnseite des Stators oder des Rotors liegen kann.

Bei dem bekannten Verfahren können die metallischen Oberflächen des Elektromotors, insbesondere aufgrund ihrer in der Regel komplexen Geometrien, zu Messfehlern führen. Ursache für solche Messfehler können beispielsweise an den metallischen Oberflächen reflektierte Umgebungsstrahler sein, deren Temperatur nicht bekannt ist und daher auch nicht bei einer eventuellen Korrektur der vorgenommenen Temperaturmessung berücksichtigt werden kann. Darüber hinaus ist es bei dem bekannten Verfahren im Wesentlichen nur möglich, eine Aussage über die Temperatur an der Stirnseite des Rotors zu gewinnen.

Aus dem Stand der Technik, beispielsweise den Offenbarungen der JP 55099033 und der JP 20041163165 ist eine Anordnung zur Messung von Infrarotstrahlung zu entnehmen, bei der ein gegebenenfalls flexibler Lichtwellenleiter eine Infrarotstrahlung vom Messpunkt am Rotor zum Sensor überträgt.

Der vorliegenden Erfindung liegt die Aufgabe zugrunde, eine Anordnung der oben genannten Art anzugeben, die eine verbesserte Überwachung der Temperatur des Rotors ermöglicht. Diese Aufgabe wird erfindungsgemäß gelöst durch eine Anordnung nach Anspruch 1 mit einer elektrischen Maschine, die einen Stator und einen Rotor aufweist, sowie mit einem Infrarot-Temperatursensor, wobei das Detektionsfeld des Infrarot-Temperatursensors durch eine Öffnung des Stators auf die Mantelfläche des Rotors ausgerichtet ist, und wobei der Infrarot-Lichtleiter in Form einer hochreflektiven metallischen Wandung der öffnung des Stators ausgebildet ist.

Ein entsprechendes Verfahren wird im Anspruch 11 offenbart.

Die abhängigen Ansprüche beschreiben vorteilhafte Ausgestaltungen und Verfahrenschritte.

Bei der Öffnung des Stators kann es sich entweder um eine bei der elektrischen Maschine konstruktionsbedingt üblicherweise vorhandene Öffnung, wie beispielsweise eine Kühlluftöffnung, oder um eine speziell für die Messung der Temperatur des Rotors vorgesehen Öffnung handeln.

Die erfindungsgemäße Anordnung ist vorteilhaft, da sie eine Messung der Temperatur des Rotors an einer im Wesentlichen beliebigen Stelle der Mantelfläche des Rotors ermöglicht. Dies bedeutet dass eine Temperaturmessung beispielsweise auch in der Mitte oder an anderen kritischen Stellen des Rotors erfolgen kann. Eine solche Messung der Temperatur des Rotors bzw. seiner Mantelfläche bietet den Vorteil, dass eine genauere beziehungsweise aussagekräftigere Information für eine Steuerung sowie Auslegung der Leistungsklasse der elektrischen Maschine zur Verfügung gestellt werden kann. So kann beispielsweise eine lokale Überhitzung des Rotors bzw. einer Stelle des Rotors durch einen durch eine Öffnung des Stators auf die betreffende Stelle des Rotors ausgerichteten Infrarot-Temperatursensor zeitnah und zuverlässig erkannt werden, wodurch mögliche Schäden der elektrischen Maschine vorteilhafterweise vermieden werden können.

In einer besonders bevorzugten Weiterbildung der erfindungsgemäßen Anordnung ist zur Weiterleitung von Infrarot-Strahlung zwischen der Mantelfläche des Rotors und dem Infrarot-Temperatursensor ein Infrarot-Lichtleiter vorgesehen. Dies ist vorteilhaft, da mittels des Infrarot-Lichtleiters die Infrarot-Strahlung am rotorseitigen Ende des Infrarot-Lichtleiters erfasst wird. Dabei bestimmt der Durchmesser des Infrarot-Lichtleiters die erfasste Messfläche beziehungsweise den erfassten Messpunkt auf der Mantelfläche des Rotors, wobei aufgrund von Mehrfachreflexionen innerhalb des Infrarot-Lichtleiters ein wesentlicher Anteil der von der Messfläche abgestrahlten Infrarot-Strahlung am Infrarot-Temperatursensor gemessen werden kann.

Die Verwendung eines Infrarot-Lichtleiters zwischen der Mantelfläche des Rotors und dem Infrarot-Temperatursensors bietet weiterhin den Vorteil, dass eine Anpassung der Anordnung an elektrische Maschinen unterschiedlicher Bauart und Größe durch die Verwendung von Infrarot-Lichtleitern unterschiedlicher Länge auf einfache und kostengünstige Art und Weise erfolgen kann. So ist hierbei insbesondere keine Anpassung der Optik des Infrarot-Temperatursensors an die jeweilige Geometrie der elektrischen Maschine erforderlich. Ein weiterer Vorteil besteht darin, dass auftretende Störstrahlungsquellen dadurch abgeschirmt werden, dass auf den Infrarot-Lichtleiter von außen auftreffende Strahlung größtenteils reflektiert wird.

Vorzugsweise kann die erfindungsgemäße Anordnung auch derart ausgestaltet sein, dass der Infrarot-Lichtleiter als Metallröhrchen oder Metallhülse ausgebildet ist. Dies bietet den Vorteil, dass der Infrarot-Lichtleiter in seiner Herstellung kostengünstig ist. Dabei wird unter einer Metallhülse ein Infrarot-Lichtleiter verstanden, der im Unterschied zu einem Metallröhrchen nicht in die Öffnung eingeführt wird, sondern aufgrund der hohen Passgenauigkeit und zum Erreichen einer festen Verbindung in die Öffnung eingetrieben wird.

In einer weiteren bevorzugten Ausführungsform ist die erfindungsgemäße Anordnung derart ausgeprägt, dass der Infrarot-Lichtleiter in Form einer metallischen Wandung der Öffnung des Stators ausgebildet ist. Hierzu weist die Bohrung vorteilhafterweise eine hochreflektive, metallische Ausführung auf, so dass vorteilhafterweise auf einen zusätzlichen Infrarot-Lichtleiter, etwa in Form eines Metallröhrchens oder einer Metallhülse, verzichtet werden kann.

Vorzugsweise kann die erfindungsgemäße Anordnung auch derart ausgestaltet sein, dass eine Temperatur-Messeinrichtung zum Messen der Temperatur des Infrarot-Lichtleiters vorgesehen ist. Dabei kann die Temperatur-Messeinrichtung zur Messung der Temperatur des Infrarot-Lichtleiters nach einem beliebigen, für sich bekannten Verfahren ausgebildet sein. So kann die Temperatur-Messeinrichtung beispielsweise einen Heißleiter, einen Kaltleiter oder einen Halbleiter-Temperatursensor umfassen. Die Temperaturüberwachung des Infrarot-Lichtleiters ermöglicht es vorteilhafterweise, die Eigenstrahlung des Infrarot-Lichtleiters aufgrund seiner Temperatur zu berücksichtigen, das heißt beispielsweise Software-basiert eine entsprechende Korrektur der gemessenen Temperatur der Mantelfläche des Rotors vorzunehmen.

In einer bevorzugten Weiterbildung ist die erfindungsgemäße Anordnung derart ausgebildet, dass die Temperatur-Messeinrichtung Bestandteil des Infrarot-Temperatursensors ist. Dies ist vorteilhaft, da Infrarot-Temperatursensoren üblicherweise bereits eine Temperatur-Messeinrichtung zur Messung der Eigentemperatur des Infrarot-Temperatursensors aufweisen. Sofern der Infrarot-Lichtleiter thermisch gut mit dem Infrarot-Temperatursensor gekoppelt ist, so kann die Messung der Temperatur des Infrarot-Lichtleiters vorteilhafterweise durch die Temperatur-Messeinrichtung des Infrarot-Temperatursensors erfolgen. Sofern darüber hinaus der Infrarot-Lichtleiter weiterhin auch an den Stator thermisch gut angebunden ist, zum Beispiel durch eine entsprechende Verschraubung oder Passung, so ist vorteilhafterweise zugleich eine Erfassung der Statortemperatur möglich, da diese in diesem Fall der Temperatur des Infrarot-Lichtleiters entspricht. In einer weiteren bevorzugten Ausführungsform ist die erfindungsgemäße Anordnung derart ausgestaltet, dass der Infrarot-Lichtleiter an seinem rotorseitigen Ende mit einem für Infrarot-Strahlung durchlässigen Fenster abgeschlossen ist. Dies hat den Vorteil, dass Verschmutzungen von dem Infrarot-Temperatursensor ferngehalten werden.

Vorteilhafterweise kann die erfindungsgemäße Anordnung auch derart ausgeprägt sein, dass im Bereich des Fensters Mittel zur Filterung der Infrarot-Strahlung vorgesehen sind. Die Mittel zur Filterung der Infrarot-Strahlung ermöglichen es, die Eigenstrahlung des Infrarot-Lichtleiters zu messen, das heißt eine Referenzmessung durchzuführen, welche nicht durch die Wärmestrahlung, das heißt die Infrarot-Strahlung, des Rotors beeinflusst wird. Bei den Mitteln zur Filterung der Infrarot-Strahlung kann es sich beispielsweise um einen Infrarot-Filter handeln, der vor das Fenster geschoben werden kann. Darüber hinaus ist es auch denkbar, dass Fenster aus einem Material auszubilden, welches sich in seiner Infrarot-Transmission von durchlässig zu opak bzw. absorbierend variieren lässt. Dabei könnte das Fenster beispielsweise als elektro-optischer Schalter in Form einer so genannten Pockels-Zelle ausgebildet sein. Bei einer Pockels-Zelle wird durch einen Kristall in Abhängigkeit von einer anliegenden Spannung die Polarisationsebene des durchgehenden Lichts gedreht, wodurch die Intensität zwischen 0 und 100 Prozent variiert werden kann. Eine Pockels-Zelle für eine Wellenlänge von 10,6 µm ist beispielsweise aus der US 4,380,391 A1 bekannt.

In einer besonders bevorzugten Weiterbildung ist die erfindungsgemäße Anordnung derart ausgestaltet, dass zum Erfassen einer Referenz-Temperatur ein zweiter Infrarot-Temperatursensor vorgesehen ist, zwischen dem und der Mantelfläche des Rotors ein zweiter Infrarot-Lichtleiter angeordnet ist, dessen rotorseitiges Ende für Infrarot-Strahlung undurchlässig ist. Diese Ausführungsform weist ebenfalls den Vorteil auf, dass die Eigenstrahlung des Infrarot-Lichtleiters mit hoher Genauigkeit berücksichtigt werden kann. So wird durch den zweiten Infrarot-Temperatursensor ausschließlich die Eigenstrahlung des zweiten Infrarot-Lichtleiters gemessen. Sofern die beiden Infrarot-Lichtleiter abgesehen von ihrer Durchlässigkeit für Infrarot-Strahlung von gleicher Bauart sind, so kann eine Korrektur der durch den Infrarot-Temperatursensor gemessenen Infrarot-Strahlung um den mittels des zweiten Infrarot-Temperatursensors gemessenen Anteil der Eigenstrahlung des Infrarot-Lichtleiters vorgenommen werden. Dies bietet den Vorteil, dass die Temperaturverteilung innerhalb des Infrarot-Lichtleiters ermittelt werden kann und somit eine besonders genaue Erfassung des Eigenstrahlungsanteils möglich wird.

Der Verlauf der Öffnung des Stators kann vorteilhafterweise den jeweiligen Anforderungen und Gegebenheiten angepasst werden. So ist es beispielsweise denkbar, dass die Öffnung geradlinig senkrecht oder schräg zur Längsachse des Rotors verläuft. In einer besonders bevorzugten Weiterbildung der erfindungsgemäßen Anordnung weist die Öffnung des Stators einen gekrümmten Verlauf auf. Dies bietet den Vorteil, dass gegebenenfalls im Stator vorhandene Bauteile mit der Öffnung umgangen werden können, das heißt der Verlauf der Öffnung kann den jeweiligen Gegebenheiten und Erfordernissen angepasst werden.

Der Infrarot-Temperatursensor kann am oder im statorseitigen Ende der Öffnung angeordnet sein. In einer besonders bevorzugten Ausführungsform der erfindungsgemäßen Anordnung ist der Infrarot-Temperatursensor im Stator innerhalb der Öffnung angeordnet. Dies setzt voraus, dass der Infrarot-Temperatursensor vergleichsweise klein, das heißt miniaturisiert, ist beziehungsweise die Öffnung vergleichsweise groß ist. Das Anordnen des Infrarot-Temperatursensors im Stator innerhalb der Öffnung bietet den Vorteil, dass die Sensorposition insbesondere im Hinblick auf die Erfassung der Eigentemperatur eines gegebenenfalls verwendeten Infrarot-Lichtleiters günstig gewählt werden kann. So ist der Anteil der Eigenstrahlung an der gemessenen Infrarot-Strahlung umso kleiner, je näher der Infrarot-Temperatursensor am rotorseitigen Ende der Öffnung angeordnet ist. Während für den Fall, dass der Infrarot-Temperatursensor am oder im statorseitigen Ende der Öffnung angeordnet ist, die Öffnung des Stators durchgehend ist, d.h. den Stator vollständig durchstößt, ist dies in dem Fall, dass der Infrarot-Temperatursensor im Stator innerhalb der Öffnung angeordnet ist, nicht zwingend erforderlich. So ist es in diesem Fall grundsätzlich auch denkbar, dass die Öffnung an ihrem von dem Rotor abgewandten Ende verschlossen ist.

Vorzugsweise kann die erfindungsgemäße Anordnung auch derart ausgestaltet sein, dass zur Erfassung eines Temperaturprofils des Rotors weitere Infrarot-Temperatursensoren vorgesehen sind, deren Detektionsfeld jeweils durch Öffnungen des Stators auf die Mantelfläche des Rotors ausgerichtet ist. Dies bietet den Vorteil, dass die Temperatur des Rotors beziehungsweise der Mantelfläche des Rotors an verschiedenen Stellen erfasst werden kann, d.h. ein Temperaturprofil über die Länge des Rotors ermittelbar wird, wodurch beispielsweise durch die Fertigung oder durch die jeweiligen vorliegenden Kühlluftverhältnisse bedingte Maximalwerte der Temperatur und deren Ort zuverlässig erkannt werden können.

Die vorliegende Erfindung betrifft weiterhin ein Verfahren zum Betreiben einer elektrischen Maschine, die einen Stator und einen Rotor aufweist, wobei bei dem Verfahren mittels eines Infrarot-Temperatursensors eine Temperaturmessung an der elektrischen Maschine erfolgt.

Ein solches Verfahren ist ebenfalls aus der zuvor genannten Druckschrift DE 102 57 974 A1 bekannt.

Hinsichtlich des Verfahrens liegt der vorliegenden Erfindung die Aufgabe zugrunde, ein Verfahren der zuvor genannten Art anzugeben, das eine verbesserte Überwachung der Temperatur des Rotors ermöglicht.

Diese Aufgabe wird erfindungsgemäß gelöst durch ein Verfahren zum Betreiben einer elektrischen Maschine, die einen Stator und einen Rotor aufweist, bei dem mittels eines Infrarot-Temperatursensors eine Temperaturmessung an der elektrischen Maschine erfolgt, wobei eine Temperatur der Mantelfläche des Rotors durch eine Öffnung des Stators gemessen wird.

Die Vorteile des erfindungsgemäßen Verfahrens sowie seiner im Folgenden aufgeführten bevorzugten Weiterbildungen entsprechen im Wesentlichen denjenigen der erfindungsgemäßen Anordnung sowie der entsprechenden bevorzugten Weiterbildungen der erfindungsgemäßen Anordnung, so dass diesbezüglich auf die vorstehenden Ausführungen verwiesen wird.

In einer besonders bevorzugten Ausführungsform ist das erfindungsgemäße Verfahren derart ausgestaltet, dass die InfrarotStrahlung zwischen der Mantelfläche des Rotors und dem Infrarot-Temperatursensor durch einen Infrarot-Lichtleiter weitergeleitet wird.

Vorzugsweise kann das erfindungsgemäße Verfahren auch derart ablaufen, dass die Temperatur des Infrarot-Lichtleiters gemessen wird.

In einer weiteren besonders bevorzugten Ausführungsform des erfindungsgemäßen Verfahrens wird ein Infrarot-Lichtleiter verwendet, der an seinem rotorseitigen Ende mit einem für Infrarot-Strahlung durchlässigen Fenster abgeschlossen ist.

Vorteilhafterweise kann das erfindungsgemäße Verfahren auch derart ausgestaltet sein, dass durch einen zwischen der Mantelfläche des Rotors und einem zweiten Infrarot-Temperatursensor vorgesehenen zweiten Infrarot-Lichtleiter, dessen rotorseitiges Ende für Infrarot-Strahlung undurchlässig ist, eine Referenz-Temperatur erfasst wird.

In einer besonders bevorzugten Ausführungsform ist das erfindungsgemäße Verfahren derart ausgestaltet, dass mittels weiterer Infrarot-Temperatursensoren, deren Detektionsfeld jeweils durch Öffnungen des Stators auf die Mantelfläche des Rotors ausgerichtet ist, ein Temperaturprofil des Rotors erfasst wird.

Im Folgenden wird die Erfindung anhand von Ausführungsbeispielen näher erläutert. Hierzu zeigt
- Figur 1: ein erstes Ausführungsbeispiel der erfindungsgemäßen Anordnung,
- Figur 2: ein zweites Ausführungsbeispiel der erfindungsgemäßen Anordnung,
- Figur 3: ein drittes Ausführungsbeispiel der erfindungsgemäßen Anordnung,
- Figur 4: ein viertes Ausführungsbeispiel der erfindungsgemäßen Anordnung,
- Figur 5: ein fünftes Ausführungsbeispiel der erfindungsgemäßen Anordnung und
- Figur 6: ein sechstes Ausführungsbeispiel der erfindungsgemäßen Anordnung.

Die Figuren zeigen jeweils in schematischer Darstellung einen Längsschnitt der betreffenden Anordnung, wobei aus Gründen der Übersichtlichkeit in den Figuren gleiche Komponenten jeweils durch identische Bezugszeichen gekennzeichnet sind.

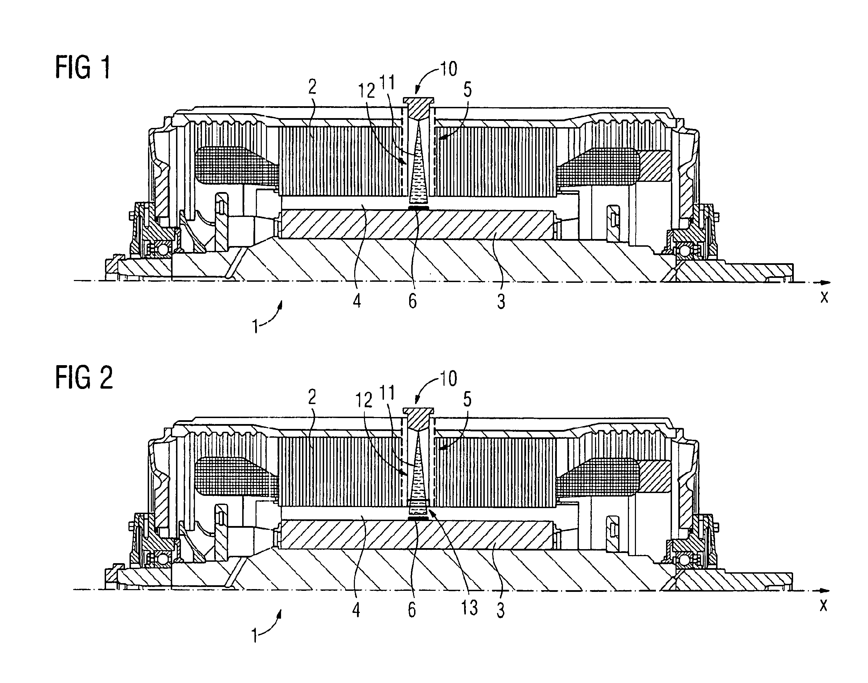

Figur 1 zeigt ein erstes Ausführungsbeispiel der erfindungsgemäßen Anordnung. Dargestellt ist eine elektrische Maschine 1 in Form eines Elektromotors, der einen Stator 2 und einen Rotor 3 aufweist, die durch einen Luftspalt 4 beabstandet sind. Zur Überwachung des Betriebs der elektrischen Maschine 1 weist die Anordnung darüber hinaus einen Infrarot-Temperatursensor 10 auf, der an einer Öffnung 5 des Stators 2 der elektrischen Maschine 1 angeordnet ist. Entsprechend der Darstellung in Figur 1 ist das Detektionsfeld 11 des Infrarot-Temperatursensors 10 auf die Mantelfläche des Rotors 3 ausgerichtet. Um hierbei eine möglichst genaue Messung der Temperatur des Rotors 3 an der betreffenden Stelle zu ermöglichen, weist diese eine Oberflächenbeschichtung 6 auf, durch die der Emissionsgrad an der betreffenden Stelle erhöht wird. Als Emissionsgrad wird hierbei der Anteil der von der jeweiligen Begrenzungsfläche emittierten Strahlen im Vergleich zu der von einem idealen Wärmestrahler, das heißt einem schwarzen Körper, abgegebenen Strahlung bezeichnet. Bei der Oberflächenbeschichtung kann es sich beispielsweise um eine Lackierung handeln.

Entsprechend der Darstellung in Figur 1 ist zur Weiterleitung der Infrarot-Strahlung zwischen der Mantelfläche des Rotors 3 und dem Infrarot-Temperatorsensor 10 ein Infrarot-Lichtleiter 12 vorgesehen, bei dem es sich beispielsweise um ein Metallröhrchen oder eine innen beschichtete Metallhülse handeln kann. Der Infrarot-Lichtleiter 12 bewirkt, dass die Infrarot-Strahlung am rotorseitigen Ende des Infrarot-Lichtleiters 12 erfasst wird, so dass der Durchmesser des Infrarot-Lichtleiters 12 die Messfläche bestimmt. Vorteilhafterweise ist der Infrarot-Lichtleiter 12 auf die Bauform und die Maße der elektrischen Maschine 1 abgestimmt, so dass das rotorseitige Ende des Infrarot-Lichtleiters 12 möglichst nahe an den Rotor 3 herangeführt ist. Augrund von Mehrfachreflexionen innerhalb des Infrarot-Lichtleiters 12 kann der Großteil der von der Messfläche, das heißt der Oberflächenbeschichtung 6, abgegebenen Infrarot-Strahlung durch den Infrarot-Temperatursensor 10 erfasst und damit die Temperatur des Rotors 3 an der mit der Oberflächenbeschichtung 6 versehenen Stelle präzise gemessen werden. Es sei darauf hingewiesen, dass die "Stelle", die durch den Infrarot-Temperatursensor erfasst wird, aufgrund der Drehung des Rotors im Betrieb der elektrischen Maschine in der Regel eine ringförmige Form aufweisen wird.

Um die Genauigkeit der Temperaturmessung weiter zu erhöhen, wird vorteilhafterweise die von dem Infrarot-Lichtleiter 12 aufgrund seiner Eigentemperatur emittierte Infrarot-Strahlung berücksichtigt, das heißt eine entsprechende Korrektur der durch den Infrarot-Temperatursensor 10 erfassten Infrarot-Strahlung vorgenommen. Dies kann beispielsweise derart geschehen, dass der Infrarot-Lichtleiter 12 thermisch gut mit dem Infrarot-Temperatursensor 10 verkoppelt wird, so dass die Messung der Temperatur des Infrarot-Lichtleiters 12 durch eine üblicherweise ohnehin in dem Infrarot-Temperatursensor 10 vorhandene Temperatur-Messeinrichtung erfolgen kann. Sofern darüber hinaus der Infrarot-Lichtleiter 12 nicht nur zum Infrarot-Temperatursensor 10, sondern darüber hinaus auch zum Stator 2 thermisch gut ge- bzw. verkoppelt ist, so entspricht die gemessene Eigentemperatur des Infrarot-Lichtleiters 12 darüber hinaus der Temperatur des Stators 2.

Die Messung der Temperatur der Mantelfläche des Rotors 3 durch die Öffnung 5 bietet insbesondere den Vorteil, dass die Temperatur des Rotors 3 der elektrischen Maschine 1 grundsätzlich an nahezu beliebiger Stelle erfasst werden kann. Dabei können bestehende Öffnungen 5 des Stators 3, wie beispielsweise Kühlluftöffnungen, verwendet werden. Alternativ hierzu kann die Öffnung 5 auch speziell für die Messung der Temperatur des Rotors 3 vorgesehen werden.

Die Verwendung des Infrarot-Lichtleiters 12 ermöglicht eine besonders effektive Abschirmung gegen Störstrahlung, die in der elektrischen Maschine 1 zu erwarten ist. Hinsichtlich der praktischen Anwendbarkeit bietet die in Figur 1 dargestellte Ausführungsform der erfindungsgemäßen Anordnung darüber hinaus den Vorteil, dass durch eine Verwendung von Infrarot-Lichtleitern unterschiedlicher Länge und Ausführungsform eine Anpassung der Anordnung an verschiedene Bauweisen und Baugrö-βen der elektrischen Maschine 1 möglich ist. Hierdurch wird es vorteilhafterweise möglich, Elektromotoren in einen weiten Leistungsbereich, beispielsweise von 1 W bis 100 MW, hinsichtlich der Temperatur ihres Rotors zu überwachen.

Weiterhin bietet die Figur 1 dargestellte Ausführungsform der erfindungsgemäßen Anordnung den Vorteil, dass eine aufwändige Optik des Infrarot-Temperatursensors 10 dadurch vermieden wird, dass eine solche Optik durch den Infrarot-Lichtleiter 12 im Wesentlichen ersetzt wird. Dabei ist der Infrarot-Lichtleiter 12 einfach handhabbar und an die jeweiligen Bedingungen und Anforderungen anpassbar. Hierdurch wird es ermöglicht, die Kosten für den Infrarot-Temperatursensor 10, der mit einer Standard-Infrarot-Optik versehen werden kann, aufgrund höherer Stückzahlen zu reduzieren. Vorteilhafterweise kann darüber hinaus unmittelbar erkannt werden, woher die Infrarot-Strahlung der Messung stammt. So ist lediglich eine Überprüfung der Lage und der Ausrichtung des Infrarot-Lichtleiters 12 erforderlich, um festzustellen, ob die gemessene Infrarot-Strahlung vom vorgesehenen Messort stammt oder nicht. Im Unterschied hierzu wäre eine Überprüfung der Ausrichtung einer Infrarot-Optik des Infrarot-Temperatursensors 10 aufgrund dessen, das Infrarot-Strahlung für das menschliche Auge nicht sichtbar ist, lediglich mittels Hilfskonstruktionen möglich und daher wesentlich aufwändiger. Darüber hinaus kann im Falle einer Verschmutzung des Infrarot-Lichtleiters 12 ein Austausch desselben auf einfache Art und Weise erfolgen, ohne dass hierfür der im Regelfall deutlich teurere Infrarot-Temperatursensor 10 ausgetauscht werden müsste.

Figur 2 zeigt ein zweites Ausführungsbeispiel der erfindungsgemäßen Anordnung. Im Unterschied zu Figur 1 ist hierbei der Infrarot-Lichtleiter 12 an seinem rotorseitigen Ende mit einem für Infrarot-Strahlung durchlässigen Fenster 13 abgeschlossen. Dies hat den Vorteil, dass im Betrieb der elektrischen Maschine 1 üblicherweise auftretende Verschmutzungen von dem Infrarot-Temperatursensor 10 ferngehalten werden. Vorteilhafterweise besteht hierbei weiterhin die Möglichkeit, im Bereich des Fensters Mittel zur Filterung der Infrarot-Strahlung vorzusehen. Dies ermöglicht es, zwischen Messstrahlung (Fenster für Infrarot-Strahlung durchlässig) und Eigenstrahlung des Infrarot-Lichtleiters 12 (Fenster für Infrarot-Strahlung undurchlässig) zu wechseln und somit eine Referenzbildung zwischen Eigenstrahlung und Messsignal zu ermöglichen, wodurch letztlich die Genauigkeit der Messung erhöht werden kann. Bei den Mitteln zur Filterung der Infrarot-Strahlung kann es sich einerseits um einen Infrarot-Filter handeln, der vor das Fenster 13 geschoben werden kann. Alternativ hierzu ist es auch denkbar, dass das Fenster 13 selbst aus einem Material besteht, welches sich hinsichtlich seiner Transmissionseigenschaften für Infrarot-Strahlung von durchlässig zu opak bzw. absorbierend variieren lässt.

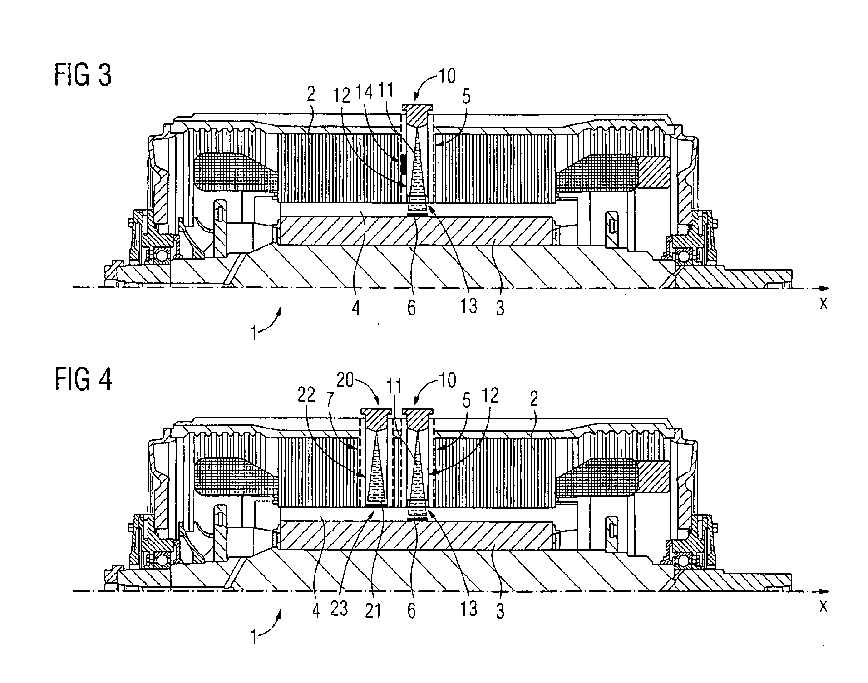

Figur 3 zeigt ein drittes Ausführungsbeispiel der erfindungsgemäßen Anordnung. Diese unterscheidet sich von derjenigen der Figur 2 dadurch, dass eine Temperatur-Messeinrichtung 14 zur Erfassung der Temperatur des Infrarot-Lichtleiters 12 vorgesehen ist. Entsprechend den vorstehenden Ausführungen bietet auch diese Ausführungsform den Vorteil, dass eine Korrektur der Messung bezogen auf die Eigenstrahlung des Infrarot-Lichtleiters 12 vorgenommen werden kann. Eine solche Korrektur kann basierend auf den Messergebnissen des Infrarot-Temperatursensors 10 sowie der Temperatur-Messeinrichtung 14 beispielweise Software-basiert erfolgen.

Figur 4 zeigt ein viertes Ausführungsbeispiel der erfindungsgemäßen Anordnung. Um die Eigenstrahlung des Infrarot-Lichtleiters 12 in der jeweiligen Einbausituation bestmöglich zu berücksichtigen, ist hierbei ein zweiter Infrarot-Temperatursensor 20 mit einem zweiten Infrarot-Lichtleiter 22 in unmittelbarer Nachbarschaft zu dem Infrarot-Temperatursensor 10 bzw. dem Infrarot-Lichtleiter 12 vorgesehen. Dabei ist das Detektionsfeld 21 des zweiten Infrarot-Temperatursensors 20 durch eine zweite Öffnung 7 des Stators 2 in Richtung des Rotors 3 der elektrischen Maschine ausgerichtet, wobei jedoch das rotorseitige Ende 23 des zweiten Infrarot-Lichtleiters 22 für Infrarot-Strahlung undurchlässig ist. Dies wird in der Ausführungsform der Figur 4 dadurch erreicht, dass das rotorseitige Ende 23 geschlossen ist. Hierdurch wird gewährleistet, dass der zweite Infrarot-Temperatursensor 20 ausschließlich Eigenstrahlung des zweiten Infrarot-Lichtleiters 22 erfasst. Dies hat zur Folge, dass die mittels des Infrarot-Temperatursensors 20 gemessene Infrarot-Strahlung um den mittels des zweiten Infrarot-Temperatursensors 20 erfassten Anteil der Eigenstrahlung korrigiert werden kann. Dabei wird vorteilhafterweise die Temperaturverteilung der Eigenstrahlung nahe an dem jeweiligen Einbauort des Infrarot-Temperatursensors 10 ermittelt, so dass eine besonders genaue Erfassung des Eigenstrahlungsanteils möglich wird.

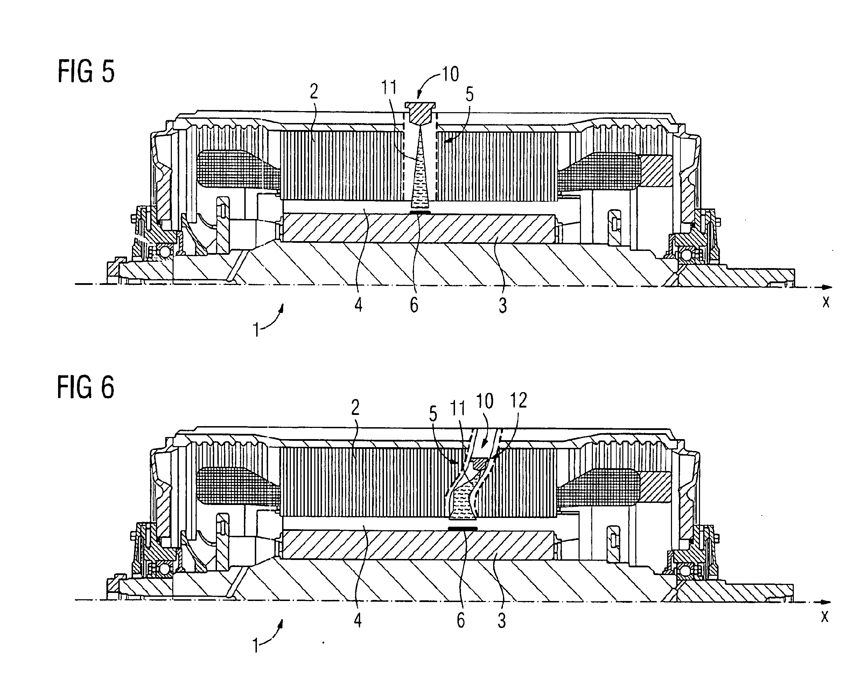

Figur 5 zeigt ein fünftes Ausführungsbeispiel der erfindungsgemäßen Anordnung, wobei der Infrarot-Lichtleiter in Form einer metallischen Wandung der Öffnung 5 des Stators 2 ausgebildet ist. Dies bietet den Vorteil, dass auf einen separaten Infrarot-Lichtleiter - wie er in den zuvor beschriebenen Ausführungsbeispielen dargestellt war - verzichtet werden kann. So kann die Öffnung 5 des Stators 2 der elektrischen Maschine 1 beispielsweise in Form einer Bohrung mit einer hochreflektiven metallischen Bohrungswandung selbst als Infrarot-Lichtleiter ausgeprägt sein, wobei vorteilhafterweise eine Politur der metallischen Wandung auf eine Rauheit bis Rauigkeit von etwa 1µm erfolgt.

Figur 6 zeigt ein sechstes Ausführungsbeispiel der erfindungsgemäßen Anordnung. Im Unterschied zu dem Ausführungsbeispiel der Figur 1 weist hierbei die öffnung 5 des Stators 2 einen gekrümmten Verlauf auf. Darüber hinaus ist der Infrarot-Temperatursensor 10 im Stator 2 innerhalb der Öffnung 5, das heißt in dem dargestellten Ausführungsbeispiel innerhalb des Infrarot-Lichtleiters 12, der ebenfalls gekrümmt ist, angeordnet. Dadurch, dass der Infrarot-Temperatursensor 10 innerhalb des Stators 2 angeordnet ist, kann seine Position insbesondere im Hinblick auf die Eigentemperaturerfassung des Infrarot-Lichtleiters 12 vorteilhaft gewählt werden. Dabei ist zu berücksichtigen, dass der Eigenstrahlungsanteil an der von dem Infrarot-Temperatursensor 10 erfassten Infrarot-Strahlung desto kleiner ist, je weiter vorne, das heißt je näher am rotorseitigen Ende der Öffnung 5, der Infrarot-Temperatursensor 10 angeordnet ist.

Der in Figur 6 dargestellte gekrümmte Verlauf der Öffnung 5 ermöglicht es, vorhandene Bauteile der elektrischen Maschine 1 mit der Öffnung 5 zu umgehen, das heißt, die Form beziehungsweise den Verlauf der Öffnung 5 sowie des Infrarot-Lichtleiters 12 an die jeweilige Geometrie und die jeweiligen Gegebenheiten der elektrischen Maschine 1 anzupassen.

Entsprechend den vorstehenden Erläuterungen handelt es sich bei den beschriebenen Ausführungsformen der erfindungsgemäßen Anordnung um eine insbesondere kostengünstige, messtechnische genaue, flexibel für unterschiedliche Formen und Baugrößen von elektrischen Maschinen 1 einsetzbare Lösung, um die Temperatur des Rotors 3 der elektrischen Maschine 1 zu messen.

## Patentansprüche

1. Anordnung mit einer elektrischen Maschine (1), die einen Stator (2) und einen Rotor (3) aufweist, sowie mit einem Infrarot-Temperatursensor (10),
wobei
das Detektionsfeld (11) des Infrarot-Temperatursensors (10) durch eine Öffnung (5) des Stators (2) auf die Mantelfläche des Rotors (3) ausgerichtet ist
**dadurch gekennzeichnet, dass** der Infrarot-Lichtleiter (12) in Form einer hochreflektiven metallischen Wandung der Öffnung (5) des Stators (3) ausgebildet ist.

2. Anordnung nach Anspruch 1,
**dadurch gekennzeichnet, dass**
die hochreflektive metallische Wandung mittels Politur auf eine Rauheit bis etwa 1µm erfolgt.

3. Anordnung nach einem der Ansprüche 1 oder 2,
**dadurch gekennzeichnet, dass**
eine Temperatur-Messeinrichtung (14) zum Messen der Temperatur des Infrarot-Lichtleiters (12) vorgesehen ist.

4. Anordnung nach Anspruch 3,
**dadurch gekennzeichnet, dass**
die Temperatur-Messeinrichtung (14) Bestandteil des Infrarot-Temperatursensors (10) ist.

5. Anordnung nach einem der Ansprüche 2 bis 4,
**dadurch gekennzeichnet, dass**
der Infrarot-Lichtleiter (12) an seinem rotorseitigen Ende mit einem für Infrarot-Strahlung durchlässigen Fenster (13) abgeschlossen ist.

6. Anordnung nach Anspruch 5,
**dadurch gekennzeichnet, dass**
im Bereich des Fensters (13) Mittel zur Filterung der Infrarot-Strahlung vorgesehen sind.

7. Anordnung nach einem der Ansprüche 2 bis 6,
**dadurch gekennzeichnet, dass**
zum Erfassen einer Referenz-Temperatur ein zweiter Infrarot-Temperatursensor (20) vorgesehen ist, zwischen dem und der Mantelfläche des Rotors (3) ein zweiter Infrarot-Lichtleiter (22) angeordnet ist, dessen rotorseitiges Ende (23) für Infrarot-Strahlung undurchlässig ist.

8. Anordnung nach einem der vorangehenden Ansprüche,
**dadurch gekennzeichnet, dass**
die Öffnung (5) des Stators (3) einen gekrümmten Verlauf aufweist.

9. Anordnung nach einem der vorangehenden Ansprüche,
**dadurch gekennzeichnet, dass**
der Infrarot-Temperatursensor (10) im Stator (3) innerhalb der Öffnung (5) angeordnet ist.

10. Anordnung nach einem der vorangehenden Ansprüche,
**dadurch gekennzeichnet, dass**
zur Erfassung eines Temperaturprofils des Rotors (3) weitere Infrarot-Temperatursensoren vorgesehen sind, deren Detektionsfeld jeweils durch Öffnungen des Stators (2) auf die Mantelfläche des Rotors (3) ausgerichtet ist.

11. Verfahren zum Betreiben einer elektrischen Maschine (1), die einen Stator (2) und einen Rotor (3) aufweist, wobei bei dem Verfahren mittels eines Infrarot-Temperatursensors (10) eine Temperaturmessung an der elektrischen Maschine (1) erfolgt, wobei
eine Temperatur der Mantelfläche des Rotors (3) durch eine Öffnung (5) des Stators (2) gemessen wird
**dadurch gekennzeichnet, dass** die Infrarot-Strahlung zwischen den Mantelflächen des Rotors (3) und dem Infrarot-Temperatursensor (10) durch eine hochreflektiven metallischen Wandung der Öffnung (5) des Stators (3) weitergeleitet wird.

12. Verfahren nach Anspruch 11,
**dadurch gekennzeichnet, dass**
die hochreflektive metallische Wandung mittels Politur auf eine Rauheit bis etwa 1µm erfolgt.

13. Verfahren nach Anspruch 11 oder 12,
**dadurch gekennzeichnet, dass**
die Temperatur des Infrarot-Lichtleiters (12) gemessen wird.

14. Verfahren nach einem der Ansprüche 11 bis 13,
**dadurch gekennzeichnet, dass**
ein Infrarot-Lichtleiter (12) verwendet wird, der an seinem rotorseitigen Ende mit einem für Infrarot-Strahlung durchlässigen Fenster (13) abgeschlossen ist.

15. Verfahren nach einem der Ansprüche 11 bis 14,
**dadurch gekennzeichnet, dass**
durch einen zwischen der Mantelfläche des Rotors (3) und einem zweiten Infrarot-Temperatursensor (20) vorgesehenen zweiten Infrarot-Lichtleiter (22), dessen rotorseitiges Ende (23) für Infrarot-Strahlung undurchlässig ist, eine Referenz-Temperatur erfasst wird.

16. Verfahren nach einem der Ansprüche 11 bis 15,
**dadurch gekennzeichnet, dass**
mittels weiterer Infrarot-Temperatursensoren, deren Detektionsfeld jeweils durch Öffnungen des Stators (2) auf die Mantelfläche des Rotors (3) ausgerichtet ist, ein Temperaturprofil des Rotors (3) erfasst wird.

## Claims

1. Arrangement with an electrical machine (1) having a stator (2) and a rotor (3) and also with an infrared temperature sensor (10),
wherein
the detection field (11) of the infrared temperature sensor (10) is aligned through an opening (5) of the stator (2) onto the outer surface of the rotor (3)
**characterised in that**
the infrared optical waveguide (12) is embodied in the form of a highly-reflective metallic walling of the opening (5) of the stator (3).

2. Arrangement according to claim 1,
**characterised in that**
the highly-reflective metallic walling is polished to a roughness of around 1µm.

3. Arrangement according to one of claims 1 or 2,
**characterised in that**
a temperature measurement device (14) is provided for measuring the temperature of the infrared optical waveguide (12).

4. Arrangement according to claim 3,
**characterised in that**
the temperature measurement device (14) is a component of the infrared temperature sensor (10).

5. Arrangement according to one of claims 2 to 4,
**characterised in that**
the infrared optical waveguide (12) is terminated at its rotor-side end by a window (13) transparent for infrared radiation.

6. Arrangement according to claim 5,
**characterised in that**
means for filtering the infrared radiation are provided in the area of the window (13).

7. Arrangement according to one of claims 2 to 6,
**characterised in that**,
to detect a reference temperature, a second infrared temperature sensor (20) is provided, between which and the outer surface of the rotor (3) a second infrared optical waveguide (22) is arranged, whose rotor-side end (23) is not transparent for infrared radiation.

8. Arrangement according to one of the preceding claims,
**characterised in that**
the opening (5) of the stator (3) has a curved course.

9. Arrangement according to one of the preceding claims,
**characterised in that**
the infrared temperature sensor (10) is arranged in the stator (3) within the opening (5).

10. Arrangement according to one of the preceding claims,
**characterised in that**,
for detecting a temperature profile of the rotor (3), further infrared temperature sensors are provided whose detection field is aligned onto the outer surface of the rotor (3), through openings of the stator (2) in each case.

11. Method for operating an electrical machine (1) having a stator (2) and a rotor (3), wherein a temperature is measured at the electrical machine (1) in the method by means of an infrared sensor (10), wherein
a temperature of the outer surface of the rotor (3) is measured through an opening (5) of the stator (2)
**characterised in that**
the infrared radiation is conducted between the outer surfaces of the rotor (3) and the infrared temperature sensor (10) by a highly-reflective metallic walling of the opening (5) of the stator (3).

12. Method according to claim 11,
**characterised in that**
the highly-reflective metallic walling is polished to a roughness of around 1µm.

13. Method according to claim 11 or 12,
**characterised in that**
the temperature of the infrared optical waveguide (12) is measured.

14. Method according to one of claims 11 to 13,
**characterised in that**
an infrared optical waveguide (12) is used, which is terminated at its rotor-side end by a window (13) transparent for infrared radiation.

15. Method according to one of claims 11 to 14,
**characterised in that**
a reference temperature is detected by second infrared optical waveguide (22) provided between the outer surface of the rotor (3) and a second infrared temperature sensor (20), whose rotor-side end (23) is not transparent for infrared radiation.

16. Method according to one of claims 11 to 15,
**characterised in that**
a temperature profile of the rotor (3) is detected by means of further infrared temperature sensors, whose detection field is aligned in each case through openings of the stator (2) onto the outer surface of the rotor (3).

## Revendications

1. Agencement comprenant une machine électrique (1) qui comporte un stator (2) et un rotor (3), ainsi qu'un capteur de température infrarouge (10),
le champ de détection (11) du capteur de température infrarouge (10) étant orienté sur la surface extérieure du rotor (3) à travers une ouverture (5),
**caractérisé en ce que**
le guide de lumière infrarouge (12) est réalisé sous la forme d'une paroi métallique hautement réfléchissante de l'ouverture (5) du stator (3).

2. Agencement selon la revendication 1,
**caractérisé en ce que**
la paroi métallique hautement réfléchissante est réalisée par polissage jusqu'à obtenir une rugosité allant jusqu'à environ 1 µm.

3. Agencement selon l'une des revendications 1 ou 2,
**caractérisé en ce que**
un dispositif de mesure de la température (14) est prévu pour mesurer la température du guide de lumière infrarouge (12).

4. Agencement selon la revendication 3,
**caractérisé en ce que**
le dispositif de mesure de la température (14) fait partie du capteur de température infrarouge (10).

5. Agencement selon l'une des revendications 2 à 4,
**caractérisé en ce que**
le guide de lumière infrarouge (12) se termine à son extrémité côté rotor par une fenêtre (13) perméable au rayonnement infrarouge.

6. Agencement selon la revendication 5,
**caractérisé en ce que**
des moyens de filtration du rayonnement infrarouge sont prévus dans la région de la fenêtre (13).

7. Agencement selon l'une des revendications 2 à 6,
**caractérisé en ce que**
pour détecter une température de référence, un deuxième capteur de température infrarouge (20) est prévu, entre lequel et la surface extérieure du rotor (3) est disposé un deuxième guide de lumière infrarouge (22) dont l'extrémité (23) coté rotor est imperméable au rayonnement infrarouge.

8. Agencement selon l'une des revendications précédentes,
**caractérisé en ce que**
l'ouverture (5) du stator (3) présente une allure courbe.

9. Agencement selon l'une des revendications précédentes,
**caractérisé en ce que**
le capteur de température infrarouge (10) est disposé dans le stator (3) à l'intérieur de l'ouverture (5).

10. Agencement selon l'une des revendications précédentes,
**caractérisé en ce que**
pour détecter un profil de température du rotor (3), d'autres capteurs de température infrarouges sont prévus, dont le champ de détection est orienté sur la surface extérieure du rotor (3) à travers des ouvertures du stator (2).

11. Procédé de fonctionnement d'une machine électrique (1) qui comporte un stator (2) et un rotor (3), procédé dans lequel une mesure de température sur la machine électrique (1) est effectuée au moyen d'un capteur de température infrarouge (10),
une température de la surface extérieure du rotor (3) étant mesurée à travers une ouverture (5) du stator (2),
**caractérisé en ce que**
le rayonnement infrarouge entre les surfaces extérieures du rotor (3) et du capteur de température infrarouge (10) est transmis par une paroi métallique hautement réfléchissante de l'ouverture (5) du stator (3).

12. Procédé selon la revendication 11,
**caractérisé en ce que**
la paroi métallique hautement réfléchissante est réalisée par polissage jusqu'à obtenir une rugosité allant jusqu'à environ 1 µm.

13. Procédé selon la revendication 11 ou 12,
**caractérisé en ce que**
on mesure la température du guide de lumière infrarouge (12).

14. Procédé selon l'une des revendications 11 à 13,
**caractérisé en ce que**
on utilise un guide de lumière infrarouge (12) qui se termine à son extrémité côté rotor par une fenêtre (13) perméable au rayonnement infrarouge.

15. Procédé selon l'une des revendications 11 à 14,
**caractérisé en ce que**
on détecte une température de référence au moyen d'un deuxième guide de lumière infrarouge (22) prévu entre la surface extérieure du rotor (3) et un deuxième capteur de température infrarouge (20) et dont l'extrémité (23) côté rotor est imperméable au rayonnement infrarouge.

16. Procédé selon l'une des revendications 11 à 15,
**caractérisé en ce que**
on détecte un profil de température du rotor (3) au moyen d'autres capteurs de température infrarouges dont le champ de détection est orienté sur la surface extérieur du rotor (3) à travers des ouvertures du stator (2) respectives.
